# EUROPEAN PATENT APPLICATION

(11) **EP 1 653 675 A1**
(43) Date of publication of application: **03.05.2006**
(21) Application number: 04025835.2
(22) Date of filing: 29.10.2004
(51) Int. Cl.: H04L 12/56

(54) **Method and label switching router for providing mobility to a mobile host in a mobile network employing multi-protocol label switching**

(71) Applicant: MATSUSHITA ELECTRIC INDUSTRIAL CO., LTD., Kadoma-shi, Osaka 571-8501 (JP)
(72) Inventor: Velev, Genadi, 64295 Darmstadt (DE)
(74) Representative: Grünecker, Kinkeldey, Stockmair & Schwanhäusser Anwaltssozietät

(57) **Abstract**

A method is disclosed which provides mobility to a mobile host (MH) in a mobile network employing multi-protocol label switching (MPLS) transport at least in a part of the network. During a handover, the mobile host receives a broadcast message from a new egress node of the MPLS network. It attaches to the new egress node, whereby the egress node leams the MH identifier. The new egress node sends a request message containing the identifier of the MH and its own identifier to one or a plurality of ingress nodes of the MPLS network. Each ingress node checks a mapping table for label switched paths (LSPs) serving the identified MH. If such paths exist, the ingress node initiates the set up of a new LSP to the new egress node for each existing LSP.

## Description

### BACKGROUND OF THE INVENTION

### 1. Field of the Invention

The present invention generally relates to mobile networks. In particular, this invention considers a scenario of a mobile network, in which Multi-Protocol Label Switching (MPLS) is deployed as a transport technology over the whole or a portion of the wired part of the mobile network (i.e. the Aggregation network and partially the Radio Access Network, RAN). To assure the quality of service (QoS) requirements, MPLS-based tunnels are set up, deploying Traffic Engineering (TE) options of MPLS signalling. The data packets destined for a roaming end-receiver (Mobile Host, MH) are tunnelled over one or more such MPLS-based tunnels, which are also referred to as label switched path (LSP) tunnel. The LSP tunnels can be both point-to-point (P2P) or more point-to-multipoint (P2MP).

### 2. Description of the Related Art

Mobility management solutions for data communication in cellular networks, for example 2G (GSM) and 3G (UMTS), are technology specific and/or circuit-switched. For a future forth generation (4G) mobile networks mobility solutions are needed which are based on packet-switched transport technologies. The IETF has standardized mobility management for IP-based packet-switched networks known as Mobile IP (MIP). In this standard, the IP routing uses the packet's IP address as information about the destination point, i.e. the IP address determines unambiguously the geographical point of attachment. MIP extends the classical IP routing with the mobile host's possibility to be associated with two IP addresses: a static "home" address and a dynamic "care-of-address" (CoA), which reflects the MH's current point of attachment. An overview about the functionality of MIP can be found in C. Perkins et. al., "IP Mobility Support for IPv4", RFC 3344, August 2002, pp. 3-17.

Further herein below, a scenario is assumed, where in contrary to MIP the mobile host keeps the same IP address when it moves within the network of the same operator. The IP packets are tunnelled over the mobile network employing traffic engineered (TE) MPLS, which assures QoS and TE, together with fast transport. The MPLS concept and current approaches for mobility in MPLS are described further below.

### System Model

This invention is based on a system architecture intended to cover 4th generation (4G) mobile networks. As basis a 3rd Generation (3G) architecture is deployed. The network is divided in a Core network and a Radio Access Network (RAN). One important requirement for the RAN is that various access technologies have to be supported, e.g. Wireless Local Area Network (LAN), 3G RAN and future 4G RAN. The present invention deploys a system model, in which each of the different radio access technologies is regionally organized in radio access domains. A centralized architecture is suggested for these domains, in which the control and management entity is called radio access controller (RAC). Depending on the radio access technology, the RAC can be an access bridge (regarding IEEE802.1 architecture), access controller (regarding the centralized WLAN access architecture assumed in IETF's CAPWAP working group ), or radio network controller (RNC, as defined in 3G). Main function of the RAC is to control, manage and monitor the base stations (BSs) and their radio resources.

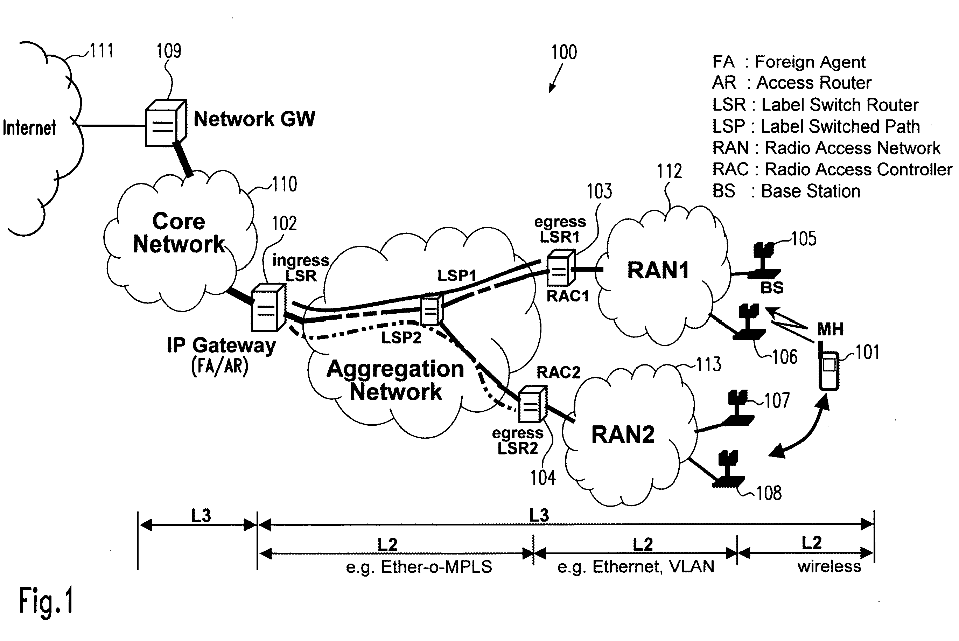

The assumed system model can be seen in Figure 1. The network gateway connects the mobile network to Internet and other provider's networks. The Core network assures the connectivity between network gateway and a plurality of IP gateways. On the other hand, the IP gateway is the aggregation point for all RACs and therefore, therefore the name of the network between IP gateway and RAC is called aggregation network.

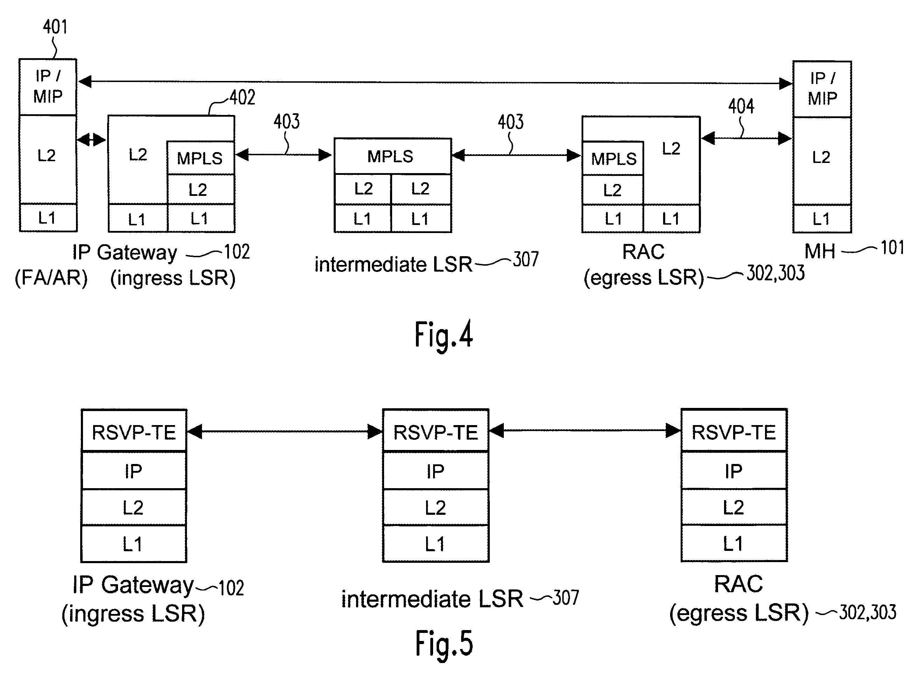

The IP gateway is an entity implementing the functions of ingress LSR in the MPLS transport layer and Foreign Agent (FA) or Access Router (AR) in the IP layer. We use the both terms FA and AR to show that both Internet Protocol versions, IPv4 and IPv6, are supported in this invention. Normally, FA is an element of mobile IPv4 protocol, whereas AR is rather used in connection with mobile IPv6 protocol. A detailed description of the FA functionality can be found in sections 1.5 and 3.7 of RFC 3344, cited above. It is not necessary that the ingress LSR and FA/AR are physically located in the same entity, it is rather important that ingress LSR and FA/AR communicate via common L2 technology as shown in Figure 4. According to this latter figure, the aggregation network and RAN provide L2 connectivity between the IP gateway and MH. IP gateway (also FA/AR) provides L3 services to the MH. The communication between MH and FA/AR, as well as the mobile IP functionality are not discussed in further detail herein. This invention focuses on the aggregation network, where LSP tunnels (TE-LSPs) carry the MH's data between IP GW and RAC.

According to the scenario assumed in this invention, the ingress LSR is located in the IP GW and the egress LSR is in the RAC. The packets arriving at the IP GW and destined to a particular MH are encapsulated at the ingress LSR (i.e. addition of MPLS label), transported over a pre-set up LSP tunnel, de-capsulated at the egress LSR and transported on L2 over the RAN to the MH. With respect to the assumption in Figure 1, the RAC is an entity implementing in the data plane (i) L2 protocol(s) used in the radio access domain and (ii) edge/egress LSR functionality. In the control plane, the RAC implements (i) MPLS control protocol(s), i.e. RSVP-TE, and (ii) some additional IP-based signalling protocols for e.g. exchanging AAA with central entities in the Core network.

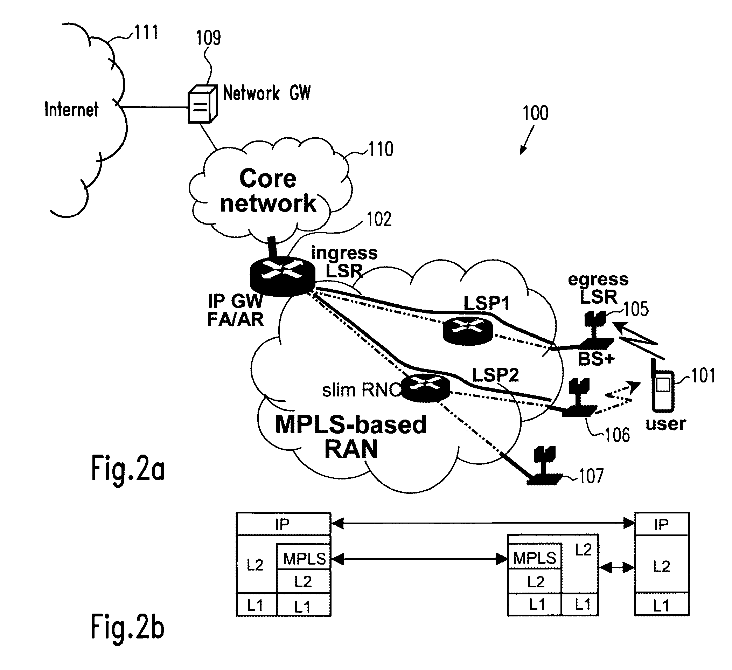

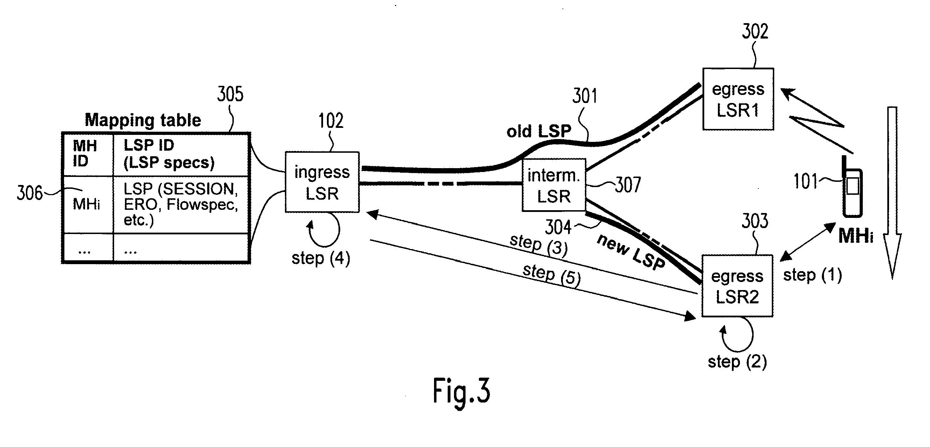

In Figure 1 the LSP tunnel starts from the GW and ends at the RAC. However, another scenario might be possible, in which the LSP tunnel is terminated at a BS as shown in Fig. 2. Therefore, we would like to generalize the system model and to introduce an overlay model as depicted in Figure 3. Further in this document, the term RAC is used as the first MPLS-capable node from the MH's perspective. The MH does not support MPLS, and communicates with the RAC on L2.

The term mobile host (MH) used in this document is a common representative for a mobile computing device as notebook, 3G user equipment (UE) or even a personal area network (PAN), which is formed by several personal devices. The MH is connected via wireless link with a BS, which terminates the wireless communication and assures a wire line packet-switched connection with further entities in the mobile network.

### MPLS and Mobility in MPLS

This section describes the MPLS technology and the possibilities to apply it as tunnelling protocol in mobile networks.
The MPLS concept employs two distinct functional planes: control plane and forwarding plane. In the control plane, standard routing protocols are used (e.g. "Open Shortest Path First", OSPF, and "Border Gateway Protocol", BGP) to exchange information with other routers to build and maintain a forwarding table. In the forwarding plane, when data packets arrive, the forwarding component searches in the forwarding table to make a routing decision for each packet. To each packet a short label with fixed length is attached identifying the Forwarding Equivalent Class (FEC). The forwarding plane in MPLS is based on a so-called label swapping algorithm. The label switch (known as Label Switch Router, LSR) performs a routing table lookup, maps the packet to a FEC and then assigns a label to the packet before forwarding it to the next LSR in the Label Switched Path (LSP). A detailed specification of MPLS concept can be found in sections 2 and 3 of E. Rosen, Floyd, A. Viswanathan, and R. Callon, "Multiprotocol Label Switching Architecture", RFC 3031, January 2001, pp. 3-37.

The MPLS described above has still the hop-by-hop forwarding paradigm inherited from standard IP routing. To increase the efficiency and the reliable network operations in the MPLS domain, as well as to meet QoS requirements, Traffic Engineering (TE) capabilities for MPLS are specified mainly in sections 2, 3 and 4 of D. Awduche, J. Malcolm, J. Agogbua, M. O'Dell, J. McManus, "Requirements for Traffic Engineering Over MPLS", RFC 2702, September 1999, pp. 4-10. These capabilities can be used to optimize the utilization of network resources and to enhance traffic oriented performance characteristics. An LSP set up by TE constraints is called LSP tunnel, since the flow along an LSP is completely identified by the label applied at the ingress node of the path. If sets of LSP tunnels are associated together, e.g. for the purpose of performing re-route operations to the whole set of LSP tunnels, such sets are called traffic engineered tunnels (TE tunnels). The definition of the terms 'LSP tunnel' and 'TE tunnel' as well as their difference are specified in sections 2 and 4 of D. Awduche, L. Berger, D. Gan, T. Li, V. Srinivasan, G. Swallow, "RSVP-TE: Extensions to RSVP for LSP Tunnels", RFC 3209, December 2001, pp. 7-15 and 17-49.

Currently MPLS is widely deployed generic transport technology, however, there are not available mechanism in the specifications to provide mobility for the LSP. Several recent publications have considered the deployment of MPLS in mobile networks. While section 3 in F. Chiussi, D. Khotimsky, and S. Krishnan, "A Network Architecture for MPLS-Based Micro-Mobility", in Proc. of the Wireless Communications and Networking Conference (WCNC), March 2002 and sections 2 and 3 in T. Yang, Y. Dong, Y. Zhang, and D. Makrakis, "Practical Approaches for Supporting Micro Mobility with MPLS", in Proc. of the International Conference on Telecommunications (ICT), June 2002, consider micro-mobility within the mobile operator's network, the proposal described in sections 4 and 5 in Z. Ren, C.-K. Tham, C.-C. Foo, C.-C. Ko, "Integration of Mobile IP and Multi-Protocol Label Switching", in Proc. of the International Conference on Communications (ICC), June 2001, is a macro-mobility scheme. The mechanisms presented in the cited documents are based on the assumption that both Mobile IP and MPLS are deployed together and the MH will obtain a new IP CoA address after a handover. The present invention aims to introduce a mechanism helping to deploy mobility in the MPLS technology itself and not relying on the signalling of other protocols (e.g. on Mobile IP messages).

The mechanisms presented in the cited documents are based on the assumption that both Mobile IP and MPLS are deployed together and the MH will obtain a new IP CoA address after a handover. The invention presented herein aims to introduce mechanisms helping to deploy mobility in the MPLS technology itself and not relying on the signalling of other protocols (e.g. on Mobile IP messages). Further, in contrary to the mechanisms described in Chiussi et al. and in Yang et al., both cited above, with the method described herein below, the MH may retain the same IP address when roaming within several RACs. This means that at a handover between different radio access schemes within the same area (vertical handover) the MH will retain its IP address, as long as the IP GW remains the same. A description of the assumed system architecture is given above. Having this scenario in mind, it is necessary to provide mobility mechanisms to MPLS, so that the user's data flow is re-directed to the new egress LSR (i.e. new RAC).

### RSVP-TE and LSP Identification

The MPLS architecture allows the use of multiple label distribution protocols, and thus in the control plane different signalling protocols like Label Distribution Protocol (LDP) and Resource Reservation Protocol (RSVP) can be used. Initially, RSVP was designed to fulfil the Integrated Services (IntServ) concept for implementing QoS in standard IP-based networks. Extensions in RSVP with several additional objects allow to use RSVP as a signalling protocol for providing TE in MPLS. The extended RSVP is known as RSVP-TE and it is described in detail in D. Awduche, L. Berger, D. Gan, T. Li, V. Srinivasan, G. Swallow, "RSVP-TE: Extensions to RSVP for LSP Tunnels", RFC 3209, December 2001, sections 2 and 4. In particular, the extended RSVP protocol supports the instantiation of explicitly routed LSPs, with or without resource reservations. It also supports smooth re-routing of LSP tunnels, pre-emption, and loop detection.

In RSVP-TE (see RFC 3209 sections 2 and 4, cited above), an LSP tunnel is uniquely identified by SESSION and SENDER_TEMPLATE objects, which include the IP addresses of ingress LSR, egress LSR and sender and additionally the identifiers Tunnel ID and LSP ID. Due to this LSP tunnel identification, a new LSP tunnel should be set up to the new egress LSR if an egress LSR changes, as assumed in the scenario of this invention. We refer to the RSVP-TE mode as described in RFC 3209 sections 2 and 4, cited above, as point-to-point (P2P) signalling.

The invention described herein concerns also a scenario, in which point-to-multipoint (P2MP) LSPs can be deployed as well. The mechanism to set up a P2MP LSP is still not specified within the IETF, however one proposal is under discussion. Section 3 in R. Aggarwal, D. Papadimitriou and S. Yasukawa, "Extensions to RSVP-TE for Point to Multipoint TE LSPs", Internet Draft, Work in Progress, describes a mechanism how a P2MP LSP is identified. Since this mechanism may change during the standardization process, it is not discussed in further detail herein.

The method described in this invention considers both P2P and P2MP signalling. In case that P2P signalling is deployed, a new LSP has to be set up to the new egress LSR. If P2MP signalling is deployed, roaming of the MH would result in a set-up of new branch LSP to the new egress LSR.

US 20030152063 A1 focuses on improving the transport for wireless radio access networks. The radio access network comprises radio network layer (RNL) and transport network layer TNL, both operating on L2. This document provides a true decoupling at layer 2 between the radio network layer (RNL) and the transport network layer TNL. L2 in the RNL is implemented as Ethernet network. US 20030152063 A1 targets the same architectural area of a mobile network as the present invention - the backhaul transport between BS and RAC. However, whereas US 20030152063 A1 uses Ethernet procedures for setup of RNL tunnels between BS and RAC, the present invention is based on the deployment of MPLS as tunnelling technology.

US20030074471A1 provides a method to associate a geographic location with a network address. After obtaining information pertaining to a network address, the information is processed (network address is parsed by delimiter characters) to identify a plurality of geographic locations potentially associated with the network address. This requires to parse the MH ID. Furthermore only estimation about the new geographic location of the MH is performed based on the obtained MH ID information.

WO2003030467A2 provides a method for an end terminal (MH) to notify a MPLS router about its unique MPLS label. Then the MPLS router tunnels the data packets to the end terminal using label stacking. This requires to include the mobile terminal in the MPLS signalling exchange and to assign an unambiguous label to the MH.

3GPP TS 23.060 v660 describes in section 6.9.2 ("Location Management Procedures (lu-mode)") the procedures needed for the PDP context setup. On the other hand 3GPP TS 29.060 v650 describes in section 7.3 ("Tunnel Management Messages") the GTP (GPRS Tunneling Protocol) tunnel setup as a result of PDP context setup in. In the 3G systems, there are 2 GTP tunnels: one between GGSN and SGSN and second between SGSN and RNC. When the MH has one or more active connection(s) to GGSN and moves to a new RNC, the data would be forwarded from the old RNC to the new RNC. This means that normally no new GTP tunnel would be set up during the duration of a connection. If the case occurs in which a new GTP tunnel is set up, then this is initiated by the MH, which sends a "routing area update" message to the SGSN. This requires to include the MH with the handover procedures.

The introduction of TE MPLS in mobile networks incorporates the advantages of packet-switched network with the possibility to provide QoS (especially relevant for real-time services) and TE needed to optimize the network load. Since the deployed system model assumes the application of TE MPLS, and the MPLS flow (i.e. LSP tunnel) is set up per MH, it is required to dynamically change the egress LSP tunnel point, which means either to set up a new P2P LSP tunnel to the new egress point (egress LSR), or in case of P2MP LSP tunnel to set up a branch LSP from one intermediate LSR to the new egress LSR. Most of the currently known schemes for employing mobility in MPLS are based on Mobile IP, assuming that the MH accepts a new CoA IP address when it changes the egress LSR. However, a method is needed to maintain connection for the case that the MH keeps the same IP address when it roams between distinct egress LSRs. Therefore there is a need in prior art for a method to inform the ingress LSR about (1) the existing tunnel(s) conveying data to the MH and destined to the old egress LSR and (2) the new egress LSR.

International Patent Application PCT/EP04/003421 proposes to firstly exchange information between old and new egress LSRs in order to establish a relation between the MH's serving LSPs and the new egress LSR, and then to inform the ingress LSR. This approach assures certainly that the new LSP tunnel(s) have parameters identical to those of the old one, and the handover procedures are carried out only on the network side. However, the information exchange between the egress LSRs has two main disadvantages: (1) it causes longer delay in the handover process, and (2) a separate signalling protocol (e.g. Extensible Authentication Protocol, EAP) is needed between the egress LSRs. The current invention addresses exactly these two disadvantages, as the procedures of notifying the ingress LSR about the new LSP tunnel states can be reduced considerably.

### SUMMARY OF THE INVENTION

It is therefore an object of the present invention to provide an improved method to assure mobility to a mobile host in a mobile network employing MPLS. It is further an object of the present invention to provide label switching routers which can serve as egress node and ingress node in a MPLS network employing the method according to the present invention.

These objects are achieved by a method according to claim 1, a label switch router according to claim 7 and a label switch router according to claim 11.

The present invention describes a method for maintaining connectivity between ingress LSR and MH in the case that at least a part of the connection between ingress LSR and MH is based on traffic engineered (TE) MPLS transport. It is further assumed that the MH keeps the same IP address while roaming between distinct egress LSRs. To fulfil the above requirements, a method is described in which the each egress LSR has a knowledge about all ingress LSRs presented in the MPLS domain. After a new MH initiates a L2 attachment to a new egress LSR, the new egress LSR learns the MH's L2 address (e.g. MAC address), generates and sends a RSVP-TE request message to all ingress LSRs informing them about (1) its own (egress LSR) IP address and (2) the MH's L2 address (generically called MH ID). At each ingress LSR a mapping table is maintained, which unambiguously maps the MH ID to existing LSPs already serving the MH. After the ingress LSR (serving the MH) obtains the request message from the new egress LSR, it can find out which LSP tunnels are affected by the handover and perform steps to assure the connection to the new egress LSR.

The method according to the present invention may advantageously allow seamless mobility for the MH in case of an inter-access-domain handover (i.e. assumed between egress LSRs). The data flow with a correspondent node is kept alive during handovers. The handover is performed in a fast manner without packet losses by applying the principle of "make-before-brake", as firstly the new connection(s) to the new egress LSR is completed, and then the L2 handover between old and new egress LSRs is performed. With other words, a new LSP tunnel(s) is first set up to the new egress LSR before the tunnels to the old egress LSR is torn down. Thus packet losses are avoided.

Another advantage of the method according to the present invention is that it avoids the negotiation of the session QoS (and other context) parameters during the handover process, as the proposed method is based on the setup of LSP tunnels having parameters identical to those of the existing tunnels to the old egress LSR. Furthermore, the present invention reduces the duration of handover procedures, since no context transfer operations are required from the new and old egress LSRs.

Another benefit of the present invention is that there is no need to implement the micro-mobility Mobile IP extensions, e.g. hierarchical MIP or fast MIP, in either of the network entities. Standard MIPv4 or MIPv6 has to be implemented in the IP Gateway (FA/AR) and the MH (according to the scenario in Figure 4). Since most of the routers distributed on the market currently are MPLS-capable, only minor modifications in ingress and egress LSRs are required, as well as extensions to RSVP-TE as presented in this document, as the handover procedures are carried out only on the network side. Therefore the MH is relieved of the participation in the handover procedures, which would result in reduced signalling load over the radio link.

### BRIEF DESCRIPTION OF THE DRAWINGS

The accompanying drawings are incorporated into and form a part of the specification for the purpose of explaining the principles of the invention. The drawings are not to be understood as limiting the invention to only the illustrated and described examples of how the invention can be made and used. Further features and advantages will become apparent from the following and more particular description of the invention, as illustrated in the accompanying drawings, wherein
Fig. 1 describes an example of a system architecture of a mobile network;
Fig. 2 illustrates an alternative structure of a mobile network;
Fig. 3 represents an overlay model for the exchange of signalling information;
Fig. 4 shows the data plane protocol stacks in the regarded entities;
Fig. 5 shows the protocol stack in the control plane;
Fig. 6 depicts the signalling procedures for setting up new P2P LSP tunnel;
Fig. 7 depicts the signalling procedures for setting up new branch P2MP LSP tunnel; and
Fig. 8 shows an exemplary structure of a label switched router.

### DETAILED DESCRIPTION OF THE INVENTION

The exemplary embodiments of the present invention will be described with reference to the figure drawings wherein like elements and structures are indicated by like reference numbers.

Based on the system model depicted in Figure 1 the following assumptions are made:
- Micro-mobility scenario, where the MH 101 retains the same IP address while moving between different egress LSRs in a mobile network
- Data transport between IP GW and RAC is based on MPLS. To assure the fulfilment of required QoS, the MPLS is used in TE mode, as this allows the mobile operator to configure more accurately the load in the aggregation network.
- An LSP tunnel is set up per data flow to each MH. This requires to change the route of the LSP tunnel when the MH moves between RACs or BSs, and thus between egress LSRs.
In the example assumed in this invention and as depicted in Figure 1, the LSP tunnel is built between the GW 102 and RAC 103. However, other scenarios for the configuration of the mobile network are possible. One such example is described in the prior art section above and illustrated in Figure 2. In this case the LSP tunnel can start from the IP GW 102 and can be terminated at the BS 105. Generally, the method described in this invention is applicable to all scenarios in which the egress point of LSP tunnel changes due to MH mobility.

Under the conditions described above, the presented invention provides a method for maintaining connectivity between ingress LSR 102 and MH 101 in the case that a part of the data transport between network GW and MH is based on traffic engineered (TE) MPLS technology and, due to the MH mobility, the egress LSR changes. It is further assumed that the MH keeps the same IP address while roaming between distinct egress LSRs.

Since a packet-switched Core network based on Internet Protocol (IP) is assumed for this invention, the identification of all nodes in the network can be uniquely done by the IP address. Thus, when speaking about any of the nodes, it should be kept in mind that the node's IP address is the information identifying unambiguously the node. The MH can be identified either by its IP address or by its L2 (e.g. MAC) address. For generality herein the term MH ID is used rather than MH IP address or MH MAC address.

Figure 1 describes an example of a system architecture of a mobile network 100 in which the method presented in this invention can be applied. For instance, the MH 101 can be attached to a foreign mobile network 100 and needs to retrieve a Care-of-Address (CoA) as described above. The MIPv4 Foreign Agent (FA) is located e.g. in the IP gateway entity 102. In case of MIPv6, the MH 101 generates the CoA by itself with the help of Access Router (AR), which can be located in the IP gateway 102. The mechanism for retrieving a CoA is not further explained herein. Since the data transport between FA/AR 102 and MH 101 is performed on L2, the resulting L2 network becomes very large and hard to be managed. One example (assumed in this invention) can be if the RANs are organized in LAN like networks controlled by a RAC 103, 104. In this case, for scalability reasons the L2 data traffic can be tunnelled in LSP tunnels between IP gateway 102 and RAC 103, 104, as depicted in the bottom of Figure 1.

Another option could be to tunnel the L2 packets from IP gateway to the BS 105-108 as shown in Fig. 2.

In a third alternative, there is no aggregation network, and the egress nodes are located at the interface between core network and radio access network domains.

The present invention focuses on the improvement of MPLS used as tunnelling technology between IP gateway 102 and RAC 103, 104 (optionally between IP gateway 102 and BS 105-108). The IP gateway 102 and the network GW 109 (GGSN+) are connected via a Core network 110. The GGSN+ 109 assures the connection to the Internet 111 or to other private/public networks. A detailed description of IP gateway 102, RAC 103, 104 and other entities, as well as the MPLS-related functionality can be found in the prior art section above.

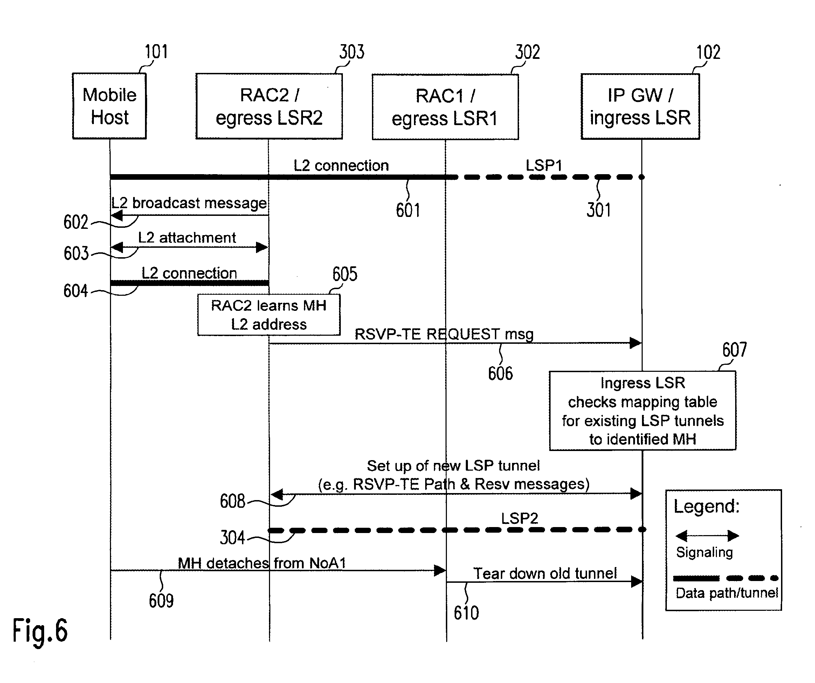

Figure 3 represents an overlay model for the exchange of signalling information, based on the system architecture depicted in Figures 1 and 2. This overlay model is seen from MPLS point of view. An initial "old LSP" 301 connects the ingress LSR 102 and the old egress LSR 302. As discussed above, egress LSR 302 might be a RAC 103 or a BS 105. When the MH 101 moves to the area of a new egress LSR 303 which might be RAC 104 or new BS 106, respectively, MH 101 and egress LSR 303 communicate on L2 depicted by step (1). Egress LSR 303 learns the MH's L2 address (generically called MH identifier, MH ID). During step (2) egress LSR 303 generates a newly specified RSVP-TE "Request" message. In step (3) egress LSR 303 sends the generated Request message to ingress LSR 102 for establishment of a LSP tunnel 304. An exemplary format of the mapping table 305 maintained in the ingress LSR 102 is depicted on the left-hand side of Figure 3. To each MH entry there is a list of all LSPs and their parameters serving this MH. In step (4) the ingress LSR 102 checks its mapping table 305 for an entry 306 with the MH ID. If an entry is found, the ingress LSR 102 knows that the existing LSP tunnel(s) associated with this MH have to be re-directed to the egress LSR 303 (new egress LSR). Step (5) shows the signalling initiated by the ingress LSR to re-direct LSP tunnels associated with the MH 101 to the new egress LSR 303. The signalling related to these explanations can be found in Figure 6, which will be explained in detail below.

Figure 4 shows the data plane protocol stacks in the regarded entities, i.e. IP gateway 102, intermediate LSR 307, egress LSR 302, 303 and MH 101. The figure shows separately the protocol stacks 401 and 402 of FA/AR and ingress LSR, however for the description of this invention it is assumed that FA/AR and ingress LSR are located in the same entity - in the IP gateway 102. It is important to mention that the communication between IP gateway 102 and MH 101 takes place on L2. The L2 data between IP gateway 102 and egress LSR 302, 303 is tunnelled through an LSP tunnel 403. Between the egress LSR 302, 303 and MH 101 the data transport 404 is supposed to be on L2. For instance, if the L2 technology were Ethernet, then the resulting protocol stack over the aggregation network would be Ethernet over MPLS (Ether-o-MPLS), and over the RAN the native Ethernet packets would be further processed.

Figure 5 shows the protocol stack in the control plane. The separation between data plane and control plane is carried out in order to depict the differences of the used protocols. As described in the prior art section above, the MPLS control protocol assumed in this invention is RSVP-TE. All entities involved in the transport over an LSP tunnel - ingress 102 , egress 303, 304 and intermediate LSRs 307 - communicate on the basis of RSVP-TE messages, which are encapsulated in IP packets. The communication between new egress LSR 303 and ingress LSR (IP gateway) 102 from Figure 3 is carried out in the control plane as well.

Figure 6 depicts the signalling procedures for setting up new P2P LSP tunnel according to the method described herein. This figure is complementary to Figure 3 and depicts the procedures in more detail.
1. At an initial point, a MH 101 has established connections to its IP GW 102 - via a L2 connection 601 with egress node 302 and via an "old LSP tunnel" 301 between egress node 302 (old egress LSR) and IP GW 102 (ingress LSR).
2. When the MH 101 moves to the area of new egress node 303, the MH 101 receives a L2 broadcast message 602 from the new egress node 303 (RAC2 104 or BS 106). Then the MH 101 establishes an L2 connection 604 to egress node 303 by an attachment procedure 603. Through the information exchange between MH 101 and egress node 303 in step 603, egress node 303 learns the MH ID (e.g. MH MAC address) 605.
3. As a next step, egress node 303 generates a RSVP-TE "Request" message containing the MH ID and the new egress LSR identifier (e.g. new egress LSR IP address). Each egress LSR has information about the ingress LSR(s) in its MPLS domain. However, if the aggregation network is hierarchical, most probably there is only one ingress LSR. The egress LSR 303 sends the "Request" message in step 606 to all ingress LSRs presented in the MPLS domain using either (1) unicast packets or (2) multicast packets, where in (2) the ingress LSRs are organized in a multicast group. The ingress LSR 102, which has an MH ID entry in its mapping table 306 processes this request further, all other ingress LSRs discard the "Request" message.
4. Each ingress LSR must maintain a mapping table containing a relation between MH ID and LSP tunnel(s) set up per MH ID. An example of the mapping table format can be seen on the left-hand side in Figure 3. After receiving the request by the new egress LSR 303, the ingress LSR 102 checks its mapping table for an entry with the MH ID in step 607. If an entry is found, the ingress LSR 102 has a complete knowledge of all existing LSP tunnel(s) 301 associated with this MH 101. If the ingress LSR 102 does not have a MH ID entry in its mapping table, it discards the "Request" message and does not carry out any further steps.
5. Having an MH ID entry in the mapping table, the ingress LSR 102 initiates step 608 to set up the LSP tunnel(s) 304 to new egress LSR 303 with parameters identical to those of the existing ones 301 to the old egress LSR 302. Dependent on the deployed RSVP-TE mode - standard P2P signalling or P2MP signalling - different possibilities exist:
   - If standard conformant signalling according to sections 2 and 4 of RFC 3209 is deployed, the change of the egress LSR results in a setup of a new LSP tunnel to the new egress LSR.
   - If P2MP signalling is deployed, see prior art section above, a new branch LSP could be established to the new egress LSR 303. In this case the ingress LSR 102 chooses the branch LSR 307, where the traffic is duplicated over the old and new branches. This would assure smooth and loss free handover, since the data traffic reaches the MH 101 via the old and new egress LSRs 302, 303. This case is preferable for the implementation of the present invention.
6. When the setup of the LSP tunnel 304 to the new egress LSR 303 is completed, the MH 101 may detach from old egress LSR 302 in step 609, and ingress LSR 102 may decide to tear down the LSP tunnel to the old egress LSR 302 in step 610.

To implement the procedure described above, the following changes to existing MPLS functionality are required:
- A new RSVP-TE "Request" message is defined, which contains information about (1) the MH ID (e.g. MAC address) and the new egress LSR identifier (e.g. new egress LSR IP address)
- A new RSVP-TE functionality is necessary in the egress LSR 302, 303 to generate a new message ("Request" message) to potential ingress LSR(s). Two variants for the "Request" message transmission are possible:
- (1) IP unicast from egress LSR to all ingress LSRs or
- (2) IP multicast from egress LSR to all ingress LSRs can be used, whereby all ingress LSRs are combined to a multicast group.
- A new database is required in the egress LSR 302, 303, containing the IP addresses of all potential ingress LSRs presented in the MPLS domain, unless the structure of the network is organized such that each MPLS domain has only one ingress node (IP gateway).
- The ingress LSR 102 needs to maintain a mapping table 306 which unambiguously maps the MH ID with existing LSPs already serving the MH. (Figure 3). After receiving the "Request" message, each ingress LSR checks the mapping table to determine if there is an MH ID entry in it. If the ingress LSR has an MH ID entry in its mapping table, it processes the "Request" message further. All other ingress LSRs discard the "Request" message
- If the ingress LSR has an entry with MH ID in its mapping table it initiates the following steps:
- If standard conformant RSVP-TE signalling according to sections 2 and 4 of RFC 3209 is deployed, the ingress LSR 102 starts to set up a new LSP tunnel to the new egress LSR 303;
- If P2MP signalling is deployed, ingress LSR 102 initiates the setup of new branch LSP to the new egress LSR 303.

If several LSP tunnels are associated with the MH ID in the mapping table, the ingress LSR 102 initiates setup of new LSP tunnels as described above (step 5 in Fig. 3) for all of the existing LSP tunnels.

The proposed method can be applied for both uni-directional and bi-directional MPLS tunnels. The procedures described above will be the same in both cases, since the setup of bi-directional tunnels is initiated as usual by the ingress LSR and the only difference to uni-directional tunnels are the RSVP-TE message formats.

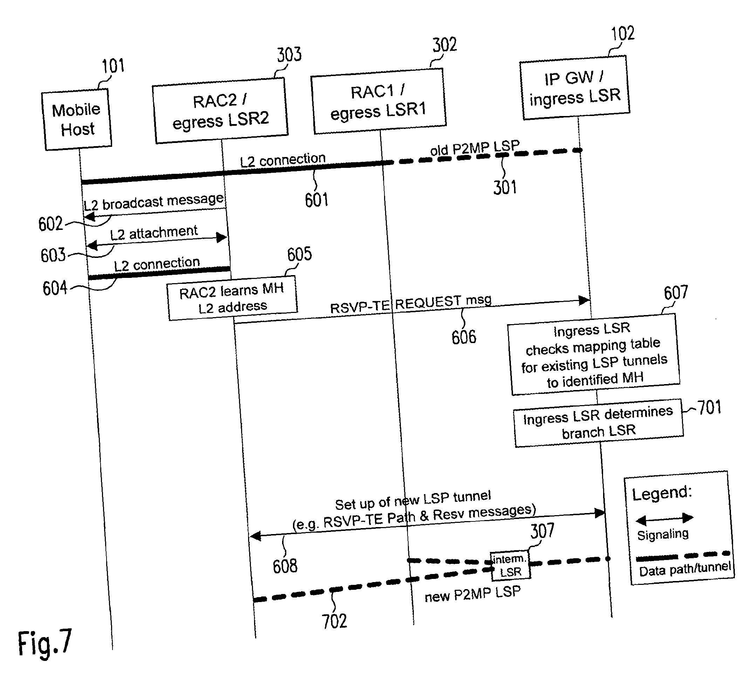

The signalling procedures and the setup of a new branch P2MP LSP tunnel between an intermediate LSR and new egress LSR is shown in Figure 7. The difference between both cases is in the LSP setup, that is whether P2P LSP signalling or P2MP signalling is used. In case of P2MP signalling, the ingress LSR determines a suitable branch LSR 307 in step 701. The path message in step 608 contains suitable means to initiate a branch P2MP LSP 702 from intermediate LSR 307 to new egress LSR 303.

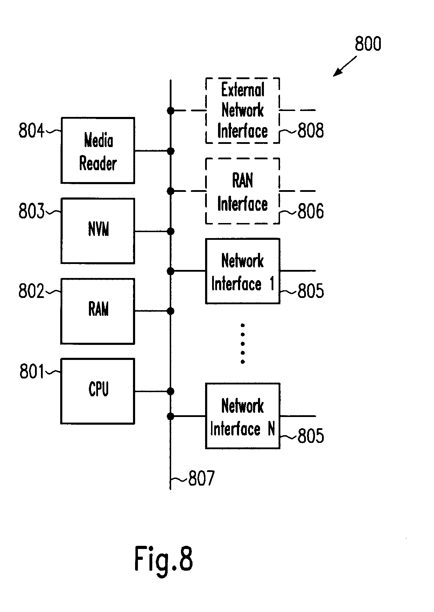

Figure 8 shows an exemplary structure of a label switch router 800 which may serve as a node in a MPLS network. The router 800 comprises a processor or CPU 801 to programmably carry out steps of the methods described above, depending on the role of the node or LSR in the network.

If the label switch router is configured to serve as an ingress node, CPU 801 comprises request receiving means configured to receive a request message from an egress node, containing information identifying a mobile host. CPU 801 of an ingress node further comprises path initiating means for initiating a setup of a multi-protocol label switching tunnel associated with said mobile host to said egress node.

If the label switch router is configured to serve as an egress node, CPU 801 comprises mobile host identification means for receiving information from a mobile host identifying the mobile host. CPU 801 of an egress node further comprises requesting means for sending at least one request message according to step (5) of Fig. 3 and step 606 of Fig. 6 to one or more ingress nodes of the MPLS network.

Instructions together with data to be processed may be preliminarily stored in RAM 802 during execution of the program.

If the label switch router is configured to serve as an ingress node, RAM 802 may further comprise the mapping table 306 shown in Figure 3. If the label switch router is configured to serve as an egress node, and if the MPLS network domain has more than one ingress node, RAM 802 may further comprise a database storing Internet Protocol addresses of ingress nodes to the multi-protocol label switching domain.

Additionally, the instructions of the program which executes the described method may be stored permanently in non-volatile memory 803, which may be semiconductor memory like read-only memory (ROM), programmable read-only memory (PROM), erasable programmable read-only memory (EPROM, EEPROM, Flash) or magnetic hard disc. Alternatively or additionally the instructions may be stored in other computer-readable media like optical disc, magnetic disc or magnetic tape, to be inserted into media reader 804 which would be a corresponding disc or tape drive unit.

The LSR also comprises MPLS network interfaces 805 to connect it with other LSRs in the MPLS network domain. If the LSR serves as radio access controller (RAC) or as a base station, it further comprises a specific interface 806 to the radio access network. If the LSR serves as gateway, it further comprises one or more external network interfaces 808to connect it to external packet switched networks like for example the core network of the mobile network or the internet. All components may be linked with some or all of the other components by a bus 807 or by dedicated links.

## Claims

1. A method for providing mobility to a mobile host (101) in a mobile network (100) using multi-protocol label switching as a transport technology in at least a part of the network between at least one multi-protocol label switching ingress node (102) and a plurality of egress nodes (302, 303) serving a plurality of radio access network domains (112, 113), comprising the steps of.
b) establishing, by the mobile host, a wireless connection (604) to a multi-protocol label switching egress node (303) serving a radio access network domain (113) in which the mobile host is located (603);
c) sending information from said mobile host (101) to said egress node (303) identifying said mobile host (605);
d) sending at least one request message, containing information identifying said mobile host (101) and the egress node (303) itself, from said egress node to at least one multi-protocol label switching ingress node (102) (606);
e) checking, at said at least one ingress node (102), whether a multi-protocol label switching tunnel (301) exists, which originates at the respective ingress node (102) and serves said mobile host (101) (607); and
f) if it is determined that such a multi-protocol label switching tunnel exists, initiating a setup of a multi-protocol label switching tunnel (304) associated with said mobile host (101) to said egress node (303) by said respective ingress node (102), (608).

2. The method according to claim 1, wherein step f) comprises initiating a setup of a new multi-protocol label switching tunnel from said first ingress node to said second egress node.

3. The method according to claim 1, wherein
said multi-protocol label switching network supports point-to-multipoint multiprotocol label switching tunnels; and
step f) comprises initiating a new branch multi-protocol label switching tunnel from an intermediate node comprised within said first label switching tunnel to the second egress node.

4. The method according to one of the claims 1 to 3, wherein when it is determined in step e) that more than one multi-protocol label switching tunnel exists which originates at the respective ingress node (102) and serves said mobile host (101), the respective ingress node initiates the setup of a multi-protocol label switching tunnel to said egress node for each existing tunnel.

5. The method according to one of the claims 1 to 4, wherein said request message is sent by Internet Protocol unicast addressing to each of said at least one ingress node.

6. The method according to one of the claims 1 to 4, wherein said request message is sent by Internet Protocol multicast addressing to at least a part out of said at least one ingress node.

7. A label switching router configured to serve as an egress node (302, 303) of a multi-protocol label switching network, comprising
a multi-protocol label switching network interface (705) for connecting it to a multiprotocol label switching network;
a radio access network interface (706) for connecting it to a radio access network and for establishing a wireless connection to a mobile host;
mobile host identification means (701) for receiving information from a mobile host identifying said mobile host; and
requesting means (701) for sending at least one request message, containing information identifying said mobile host and the egress node itself, to at least one ingress nodes of said multi-protocol label switching network.

8. The label switching router according to claim 7, further comprising a database (702) storing Internet Protocol addresses of ingress nodes to the multi-protocol label switching domain, wherein said requesting means is further configured to send said request message to ingress nodes identified by Internet Protocol addresses stored in said data base.

9. A radio access controller (103, 104) comprising the label switching router according to one of the claims 7 or 8.

10. A base station (105-108) comprising the label switching router according to one of the claims 7 or 8.

11. A label switching router configured to serve as an ingress node (102) of a multiprotocol label switching network, comprising
a network interface (705) for connecting it to a multi-protocol label switching network;
an external network interface (707) for connecting it to an external packet switching network;
request receiving means (701) configured to receive a request message from an egress node containing information identifying a mobile host and the egress node itself; and
path initiating means (701) configured to initiate a setup of a multi-protocol label switching tunnel associated with said mobile host to said egress node.

12. The label switching router according to claim 11, further comprising a mapping table (306, 702) which maps information identifying a mobile host (101) to multiprotocol label switching tunnels associated with said mobile host, wherein said path initiating means is further configured to check said mapping table for multi-protocol label switching tunnels associated with the mobile host identified in said request message, and for setting up a multi-protocol label switching tunnel associated with said mobile host to said egress node for at least a part of the existing multi-protocol label switching tunnels associated with the mobile host, retrieved from said mapping table.

13. A mobile communication network comprising at least one label switching router according to claim 7 or 8 and at least one label switching router according to claim 11 or 12.

14. A computer-readable storage medium having stored thereon instructions, which when executed on a processor of a label switching router serving as an egress node in a core network of a mobile network, cause the label switching router
to receive information from a mobile host identifying said mobile host; and
to send at least one request message, containing information identifying said mobile host, to a plurality of ingress nodes of said mobile network.

15. A computer-readable storage medium having stored thereon instructions, which when executed on a processor of a label switching router serving as an ingress node to a core network of a mobile network, cause the label switching router
to receive a request message from an egress node, containing information identifying a mobile host;
to check whether a multi-protocol label switching tunnel exists, originating said ingress node and serving said mobile host; and
if it is determined that such a multi-protocol label switching tunnel exists, to initiate a setup of a multi-protocol label switching tunnel associated with said mobile host to said egress node.
